# EUROPEAN PATENT APPLICATION

(11) **EP 1 213 082 A1**
(43) Date of publication of application: **12.06.2002**
(21) Application number: 99909209.1
(22) Date of filing: 18.03.1999
(51) Int. Cl.: B23H 7/36, B23H 7/26, B23H 7/34, B23H 7/24, B23H 1/02

(54) **METHOD AND APPARATUS FOR ELECTRODISCHARGING MACHINING**

(71) Applicant: MITSUBISHI DENKI KABUSHIKI KAISHA, Tokyo 100-8310 (JP)
(72) Inventor: Kinbara, Yoshihide, Mitsubishi Denki K. K., Tokyo 100-8310 (JP)
(74) Representative: HOFFMANN - EITLE
(86) International application number: JP9901331
(87) International publication number: WO0054920

(57) **Abstract**

In a discharge processing method wherein an insulating processing medium (13) is interpolated between an electrode (1) and a processing subject (2) and discharging energy is supplied between the electrode (1) and the processing subject (2) so that the processing subject (2) is processed by the discharge, a processing is carried out with the electrode (1) being pressed onto the processing subject (2) at a predetermined pressure so as to allow the processing medium (13) between the electrode (1) and the processing subject (2)to form a thin film while the electrode (1) and the processing subject (2) are being relatively moved.

## Description

### TECHNICAL FIELD

The present invention in general relates to a discharge processing method by which discharging energy is supplied between an electrode and a machining subject so that the processing subject is discharge-processed. More particularly, this invention relates to an improvement in the discharge processing method and the device used for such a method.

### BACKGROUND ART

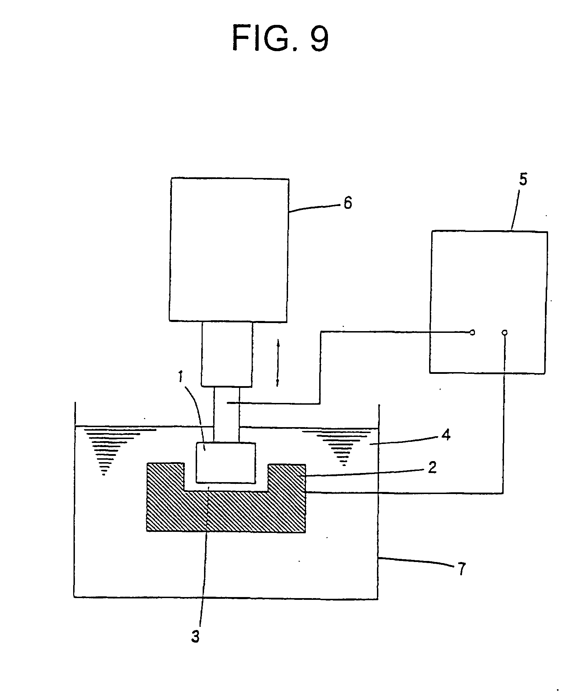

A conventional discharge processing device is shown in Fig. 9. Reference number 1 denote an electrode, reference number 2 denote a processing subject. Reference number 3 denotes a processing gap between the electrode 1 and the processing subject 2. Reference number 4 denotes processing oil that is a processing fluid having an insulating property. Reference number 5 denotes a power supply device, and reference number 6 denote a shifting device for shifting the electrode 1 in the up and down direction. Reference number 7 denotes a processing vessel in which the processing oil 4 is held and the electrode 1 and the processing subject 2 is dipped therein. The processing oil 4 is a low viscosity oil disclosed, for example, in Japanese Patent Application Laid-Open No. 6-155165.

In general, the processing gap 3 is approximately 10 µm to 30 µm wide. If this gap is narrow, then a uniformed processed surface can be obtained with less amount of discharge energy. However, if the processing gap 3 is narrow, for example of the order of 1 µm, the electrode 1 and the processing subject 2 touch each other and make the discharge processing difficult.

In the above-mentioned arrangement, discharging energy is supplied by the power supply device 5 so that a discharge is generated between the electrode 1 attached to the shifting device 6 and the processing subject 2 so that the processing subject 2 is processed according to a shape of the electrode 1. However, problems have arisen in which: a high-precision NC controlling operation has to be carried out to control the processing gap between the electrode and the processing subject, and since the processing gap is set to approximately 10 µm to 30 µm, a high initial discharging voltage is required with the result that the discharging energy can not be reduced, causing a failure to provide a surface that is more smoothly processed in the surface roughness.

A discharge processing device that uses a processing liquid paste is shown in Fig. 10. This device is disclosed in Japanese Patent Application Laid-Open No. 49-103296. Reference number 1 denotes an electrode and reference number 2 denotes a processing subject. Reference number 3 denotes a processing gap between the electrode 1 and the processing subject 2. Reference number 5 denotes a power supply device, an reference number 6 denotes a shifting device for shifting the electrode 1 in the up and down direction. Reference number 8 denotes the processing liquid paste. Main component of the processing liquid paste 8 is a conductive powder. Magnetic powder is mixed with this conductive powder. Furthermore, a slight amount of dielectric fluid, such as kerosene, is added to this mixture. Finally, the mixture is kneaded to obtained a paste.

The processing liquid paste 8 is applied to a processing portion of the processing subject 2, and discharging energy is supplied by the power supply device 5 so that a discharge is generated between the electrode 1 and the processing subject 2. The processing liquid paste 8 contains a large amount of conductive powder such as graphite so that a discharge is generated between the conductive powder and the processing subject 2. Thus, it is possible to process the side face of the processing subject 2 (A in the Figure) that is placed in parallel with the shifting direction of the electrode 1. The above-mentioned patent application describes that a finishing process having a surface roughness of approximately 10 µm Rmax has been achieved in the processing on the side face of the processing subject 2.

In the discharge processing device having the above-mentioned arrangement, however, although it is advantageous in that the surface other than that in the servo shifting direction of the electrode can be processed, problems have arisen in which in the processing on the surface in the servo shifting direction of the electrode, it is difficult to provide a smoothly processed surface in the surface roughness and it is also difficult to provide a stable processing.

### DISCLOSURE OF THE INVENTION

It is an object of this invention to provide a discharge processing method for readily providing a surface smoothly processed in the surface roughness, and a device used for such a method.

Moreover, it is an another object of the present invention is to provide a discharge processing method which can easily carry out not only a removing process through a discharge processing, but also a surface treatment by using the same device arrangement as that of the removing process, and a device used for such a method.

The discharge processing method according to a first aspect of this invention has the following arrangement. That is, processing is carried out while an electrode is pressed onto a process ing subject at a predetermined pressure so as to allow a processing medium to form a thin film with the electrode and the processing subject being relatively moved.

Furthermore, according to a second aspect of this invention, in the above-mentioned discharge processing method, it is preferable that the thin film is formed with a thickness of 0.1 to 1 µm.

Furthermore, according to a third aspect of this invention, in the above-mentioned discharge processing method, it is preferable that the relative movement is carried out in a spiral manner.

Furthermore, according to a fourth aspect of this invention, in the above-mentioned discharge processing method, it is preferable that a lubricant is used as the processing medium.

Furthermore, according to a fifth aspect of this invention, in the above-mentioned discharge processing method, it is preferable that grease is used as the processing medium.

Furthermore, according to a sixth aspect of this invention, in the above-mentioned discharge processing method, it is preferable that a material formed by allowing a polymeric water absorber to absorb water is used as the processing medium.

Furthermore, according to a seventh aspect of this invention, in the above-mentioned discharge processing method, it is preferable that silicon powder is mixed into the processing medium.

Furthermore, according to a eighth aspect of this invention, in the above-mentioned discharge processing method, it is preferable that a green compact, which is formed by compressing and molding metal such as titanium that forms a hard compound such as titanium carbide (TiC) or powder thereof, is used as the electrode. In this case, it is preferable that, carbon containing fluid is used as the processing medium.

Furthermore, according to a ninth aspect of this invention, in the above-mentioned discharge processing method, it is preferable that a green compact, formed by compressing and molding the same material as that of the processing subject or powder thereof, is used as the electrode.

Furthermore, according to a tenth aspect of this invention, in the above-mentioned discharge processing method, it is preferable that the contact area between the electrode and the processing subject, the pressing pressure, the relative shifting rate and the viscosity of the processing medium are used as parameters, and the film thickness of the processing medium between the electrode and the processing subject is controlled by changing at least one of these parameters.

Furthermore, according to a eleventh aspect of this invention, in the above-mentioned discharge processing method, it is preferable that a conductive wire is used as the electrode.

Furthermore, according to a twelfth aspect of this invention, in the above-mentioned discharge processing method, it is preferable that the processing is carried out while the electrode is being rotated.

The discharge processing device according to thirteenth aspect of this invention has following configuration. That is, it comprises a pressing unit which presses an electrode onto a processing subject with a predetermined pressure and a driving unit which moves the electrode and the processing subject relative to each other. The processing is carried out with the electrode being pressed onto the processing subject at a predetermined pressure so as to allow a processing medium to form a thin film while the electrode and the processing subject are being relatively moved.

Furthermore, according to a fourteenth aspect of this invention, in the above-mentioned discharge processing device, it is preferable that the thin film is formed with a thickness of 0.1 to 1 µm.

Furthermore, according to a fifteenth aspect of this invention, in the above-mentioned discharge processing device, it is preferable that the relative movement is carried out in a spiral manner.

Furthermore, according to a sixteenth aspect of this invention, in the above-mentioned discharge processing device, it is preferable that a lubricant is used as the processing medium.

Furthermore, according to a seventeenth aspect of this invention, in the above-mentioned discharge processing device, it is preferable that grease is used as the processing medium.

Furthermore, according to a eighteenth aspect of this invention, in the above-mentioned discharge processing device, it is preferable that a material formed by allowing a polymeric water absorber to absorb water is used as the processing medium.

Furthermore, according to a nineteenth aspect of this invention, in the above-mentioned discharge processing device, it is preferable that silicon powder is mixed into the processing medium.

Furthermore, according to a twentieth aspect of this invention, in the above-mentioned discharge processing device, it is preferable that a green compact, which is formed by compressing and molding metal such as titanium that forms a hard compound such as titanium carbide (TiC) or powder thereof, is used as the electrode. In this case, it is preferable that carbon containing fluid is used as the processing medium.

Furthermore, according to a twenty-first aspect of this invention, in the above-mentioned discharge processing device, it is preferable that a green compact, formed by compressing and molding the same material as that of the processing subject or powder thereof, is used as the electrode.

Furthermore, according to a twenty-second aspect of this invention, in the above-mentioned discharge processing device, it is preferable that the device further comprises a control unit which controls the contact area between the electrode and the processing subject, the pressing pressure, the relative shifting rate and the viscosity of the processing medium as parameters, and gives an instruction for changing at least one of the pressing pressure and the relative shifting rate.

Furthermore, according to a twenty-third aspect of this invention, in the above-mentioned discharge processing device, it is preferable that a conductive wire is used as the electrode.

Furthermore, according to a twenty-fourth aspect of this invention, in the above-mentioned discharge processing device, it is preferable that the device further comprises a rotation unit which rotates the electrode.

Furthermore, according to a twenty-fifth aspect of this invention, in the above-mentioned discharge processing device, it is preferable that the power supply device is provided with a state memory unit which controls state changes between setting and resetting states, a discharge energy charging unit containing a current regulating element that is driven by the setting state of the state memory unit made by a discharge instruction pulse, a discharge energy accumulation unit that is charged by the discharge energy charging unit, a discharge current control unit containing a discharge current regulating element placed between the discharge energy accumulation unit and the electrode, and an excessive energy discharging unit which is connected to the discharge energy accumulation unit and contains a current regulating element that is driven by the resetting state of the state memory unit. The state memory unit is reset with a predetermined time delay after a generation of a discharge between the electrode and the processing subject so that the excessive energy discharging unit is driven.

Furthermore, according to a twenty-sixth aspect of this invention, in the above-mentioned discharge processing device, it is preferable that the power supply device is provided with a state memory unit which is inverted in its ON-OFF states by a discharge instruction pulse, an AC rectangular wave power supply unit which is driven by the state memory unit, and includes a switching element that alternately connects the positive and negative electrodes of a dc power supply, a discharge current control unit which is placed between the AC rectangular wave power supply unit and the electrode, and includes a capacitor and a current regulating element, and a discharge energy control unit which is connected to the discharge current control unit, and is constituted by the capacitor and the current regulating element. A change in charge at the time when the ac rectangular power supply unit is switched between the positive and negative states in its output is allowed to form discharging energy.

The present invention has the following effects.

The discharge processing method according to first aspect of this invention makes it possible to perform a discharge processing with very small energy, and also to process the processing subject so as to have a very smooth surface in the surface roughness.

The discharge processing method according to the second aspect of the present invention has the same effects as the first aspect thereof.

The discharge processing method according to the third aspect of the present invention has the same effects as the first aspect thereof, and also has an effect for carrying out a more uniform processing effectively.

The discharge processing method according to the fourth aspect of the present invention has the same effects as the first aspect thereof, and also makes it possible to carry out the relative movement between the electrode and the processing subject smoothly.

The discharge processing method according to the fifth aspect of the present invention has the same effects as the first aspect thereof, and also makes it possible to smoothly carry out the relative movement between the electrode and the processing subject smoothly, and also to provide a good fixing property of the processing medium. The discharge processing method according to the fifth aspect of the present invention has the same effects as the first aspect thereof, and makes it possible to provide a good fixing property of the processing medium.

The discharge processing method according to the seventh aspect of the present invention has the same effects as the first aspect thereof, and makes it possible to obtain a more uniform discharge, and consequently to obtain a processed face that is smoother in its surface roughness. The discharge processing method according to the eighth aspect of the present invention has the same effects as the first aspect thereof, and makes it possible to easily carry out a surface coating on any desired surface by using the same device arrangement as that of the removing process.

The discharge processing method according to the ninth aspect of the present invention has the same effects as the first aspect thereof, and makes it possible to easily allow a material of the electrode to adhere to the processing surface of the processing subject and to build up thereon by using the same device arrangement as that of the removing process.

The discharge processing method according to the tenth aspect of the present invention has the same effects as the first aspect thereof, and also makes it possible to change the film thickness of the processing medium between the electrode and the processing subject, depending on the surface roughness and the lubricating state required for the processing subject, the power supply specifications, etc.

The discharge processing method according to the eleventh aspect of the present invention makes it possible to process the processing subject so as to have a very smooth surface in its surface roughness by using a wire discharge processing.

The discharge processing method according to the twelfth aspect of the present invention makes it possible to carry out a uniform processing in a wide range, and also to obtain a finely processed surface by using simple controlling operations such as pressing and rotating.

The discharge processing device according to the thirteenth aspect of the present invention has the same effects as the first aspect thereof.

The discharge processing device according to the fourteenth aspect of the present invention has the same effects as the thirteenth aspect thereof.

The discharge processing device according to the fifteenth aspect of the present invention has the same effects as the thirteenth aspect thereof, and also has an effect for carrying out a more uniform processing effectively.

The discharge processing device according to the sixteenth aspect of the present invention has the same effects as the thirteenth aspect thereof, and also makes it possible to carry out the relative movement between the electrode and the processing subject smoothly.

The discharge processing device according to the seventeenth aspect of the present invention has the same effects as the thirteenth aspect thereof, and also makes it possible to carry out the relative movement between the electrode and the processing subject smoothly, and also to provide a good fixing property of the processing medium.

The discharge processing device according to the eighteenth aspect of the present invention has the same effects as the thirteenth aspect thereof, and makes it possible to provide a good fixing property of the processing medium.

The discharge processing device according to the nineteenth aspect of the present invention has the same effects as the thirteenth aspect thereof, and makes it possible to obtain a more uniform discharge, and consequently to obtain a processed face that is smoother in its surface roughness.

The discharge processing device according to the twentieth aspect of the present invention has the same effects as the thirteenth aspect thereof, and makes it possible to easily carry out a surface coating on any desired surface by using the same device arrangement as that of the removing process.

The discharge processing device according to the twenty-first aspect of the present invention has the same effects as the thirteenth aspect thereof, and makes it possible to easily allow a material of the electrode to adhere to the processing surface of the processing subject and to build up thereon by using the same device arrangement as that of the removing process.

The discharge processing device according to the twenty-second aspect of the present invention has the same effects as the thirteenth aspect thereof, and also makes it possible to change the film thickness of the processing medium between the electrode and the processing subject, depending on the surface roughness and the lubricating state required for the processing subject, the power-source specifications, etc.

The discharge processing device according to the twenty-third aspect of the present invention makes it possible to process the processing subject so as to have a very smooth surface in its surface roughness by using a wire discharge processing.

The discharge processing device according to the twenty-fourth aspect of the present invention makes it possible to carry out a uniform processing in a wide range, and also to obtain a finely processed surface by using simple controlling operations such as pressing and rotating.

The discharge processing device according to the twenty-fifth aspect of the present invention has the same effects as the thirteenth aspect thereof, and makes it possible to control the discharging energy by using a simple controlling operation, and consequently to provide a small-size power supply device at low costs.

The discharge processing device according to the twenty-sixth aspect of the present invention has the same effects as the thirteenth aspect thereof, and makes it possible to control the discharging energy by using a simple controlling operation, and consequently to provide a small-size power supply device at low costs. Moreover, it is also suitable for obtaining a processed face having a smoother surface roughness, and makes it possible to realize a faster processing rate.

### BRIEF DESCRIPTION OF THE DRAWINGS

Fig . 1 is an explanatory drawing that shows a discharge processing device according to a first embodiment of the present invention;
Fig. 2 is an explanatory drawing that shows a method in which an electrode 1 is relatively shifted with respect to a processing subject 2;
Fig. 3 is an explanatory drawing that shows arrangements of a discharge processing device and a power supply device according to a second embodiment of the present invention;
Fig. 4 is an explanatory drawing that shows an arrangement of another power supply device according to the second embodiment of the present invention;
Fig. 5 is an explanatory drawing that shows a discharge processing device according to a third embodiment of the present invention;
Fig. 6 is an explanatory drawing that shows a discharge processing device according to the third embodiment of the present invention;
Fig. 7 is an explanatory drawing that shows a discharge processing device according to the third embodiment of the present invention;
Fig . 8 is an explanatory drawing that shows a discharge processing device according to a fourth embodiment of the present invention;
Fig. 9 is an explanatory drawing that shows a conventional discharge processing device; and

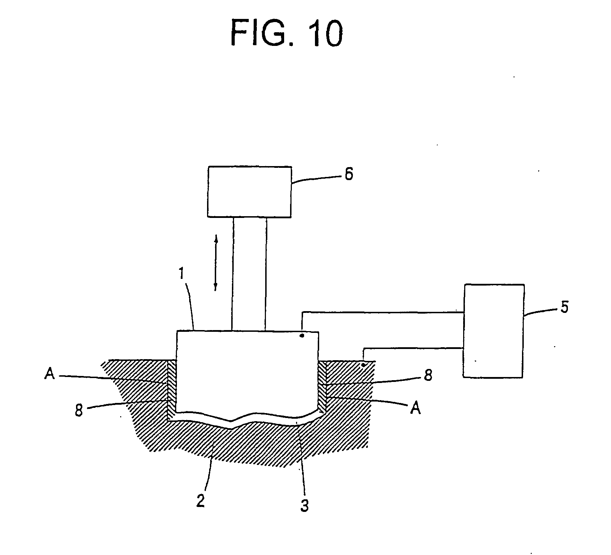

Fig. 10 is an explanatory drawing that shows a conventional discharge processing device.

### BEST MODE FOR CARRYING OUT THE INVENTION

### FIRST EMBODIMENT

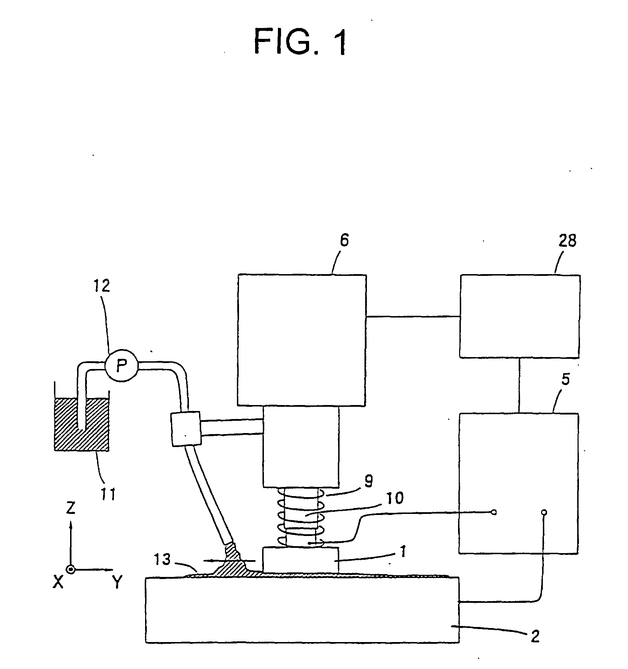

A discharge processing device according to a first embodiment of the present invention is shown in Fig. 1. Reference number 1 denotes an electrode and reference number 2 denotes a processing subject. Reference number 5 denotes a power supply device for supplying discharging energy between the electrode 1 and the processing subject 2. Reference number 6 denotes a shifting device for shifting the electrode 1 in the up and down direction (Z-axis direction). Reference number 9 denotes a coil spring and reference number 10 denotes a supporting column that is allowed to extend freely. Reference number 11 denotes a grease source, reference number 12 denote a pump, and reference number 13 is grease that is an insulating processing medium. Reference number 28 denotes a control device for controlling the power supply device 5, the shifting device 6, etc. A predetermined amount of the grease 13 is supplied from the grease source 11 to the proximity of the electrode 1 by the pump 12. The feeding device 6 is controlled so that the coil spring 9 is made into a compressed state. Thus, the restoring force of the coil spring 9 is used so as to press the electrode 1 onto the processing subject 2 at a predetermined pressure and the electrode 1 and the processing subject 2 are shifted relatively within an XY plane by using an X-axis driving device and a Y-axis driving device that are driving unit, not shown, thereby making it possible to form the grease 13 between the electrode 1 and the processing subject 2 into a very thin film (for example, in the range of approximately 0.1 to 1 µm).

The film thickness of the grease 13 between the electrode 1 and the processing subject 2 is determined based upon the contact area between the electrode 1 and the processing subject 2, the pressing pressure, the relative shifting rate and the viscosity of the grease 13. Therefore, the contact area between the electrode 1 and the processing subject 2, the pressing pressure, the relative shifting rate and the viscosity of the grease 13 are varied as parameters so that the film thickness is controlled. Thus, it becomes possible to change the film thickness according to the surface roughness and the lubricating state required for the processing subject, the power supply specifications, etc. The contact area between the electrode 1 and the processing subject 2 can be changed by the size, shape and number of the electrode 1, and the viscosity of the grease 13 can be changed by altering the kind of the grease 13. Moreover, the pressing force between the electrode 1 and the processing subject 2 can be changed by controlling the compression of the coil spring using the positional control of the shifting device 6 and changing the spring constant of the coil spring. Moreover, the relative shifting rate between the electrode 1 and the processing subject 2 can be changed by controlling the X-axis driving device and Y-axis driving device that relatively shift the electrode 1 and the processing subject 2 within the XY plane.

In this manner, the contact area between the electrode 1 and the processing subject 2, the pressing force, the relative shifting rate and the viscosity of the grease 13 are managed and controlled by the control means in the control device 28 so that the film thickness of the grease 13 between the electrode 1 and the processing subject 2 is set to a predetermined film thickness. Moreover, the relationship between the respective parameters, such as the contact area between the electrode 1 and the processing subject 2, the pressing force, the relative shifting rate and the viscosity of the grease 13, and the film thickness of the grease 13 between the electrode 1 and the processing subject 2 is preliminarily found, for example, through experiments, and placed within the control means as a table.

Furthermore, the grease 13 generally has a high viscosity and is not allowed to flow. Therefore, it has a superior fixing property, and since it is a lubricant, the electrode 1 and the processing subject 2 are allowed to relatively move smoothly.

The following may be used as the grease 13. That is, ester-type synthetic oil grease, synthetic hydrogen carbide-type grease, polyglycol-type synthetic oil grease, phenylester-type synthetic oil grease and fluorine-type synthetic oil grease; and for example, the ester-type synthetic grease is mainly composed of an ester-type synthetic oil serving as a base oil, lithium soap serving as a thickener, etc.

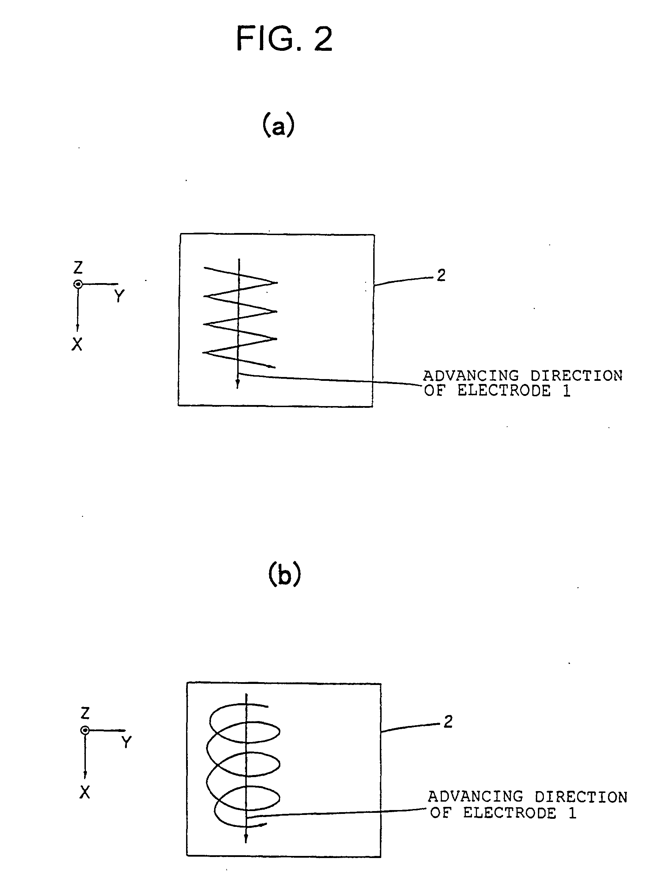

With respect to the relative shifting method of the electrode 1 and the processing subject 2 within the XY plane, as illustrated in Figs. 2(a) and 2(b), the processing subject 2 is relatively shifted in a zigzag manner or in a spiral manner with respect to the advancing direction of the electrode 1. Thus, it is possible to carry out a uniform processing operation. In particular, the relative shift in a spiral manner as shown in Fig. 2(b) makes the relative shifting rate virtually constant. Therefore, the film thickness of the grease 13 between the electrode 1 and the processing subject 2 is made virtually constant so that it is possible to effectively carry out a uniform processing operation.

The film thickness of the grease 13 between the electrode 1 and the processing subject 2 is very thin as described earlier, and set to, for example, not more than 1 µm, thereby making it possible to provide a low discharging start voltage. General discharge processing devices require a discharging start voltage of 80 to 100 V. However, the discharge processing device of the present invention is set to several volts to 10 V, not more than 20 V at most. The discharging energy is determined by the product of the voltage and current, and its time, and the energy to be charged to the floating capacitance between the electrode 1 and the processing subject 2, not shown, is proportional to the square of the voltage. Therefore, in the case when the power supply voltage of 90 V is set to 9 V, that is, one-tenth thereof, the energy is set to one-hundredth, thereby making it possible to carry out the processing operation with very small energy. Moreover, in the case of a high voltage, it is difficult to control a fine current, but in the case of a voltage as low as 10 V, it is possible to control a fine current at higher speeds comparatively easily. For this reason, the discharge processing device of the present invention makes it possible to process the surface of the processing subject 2 very smoothly in the surface roughness.

The normal discharge processing device has a limit of approximately 1 µm in its surface roughness of the processed surface, and has a disadvantage in its very slow processing rate. However, in the case of the discharge processing device of the present invention, it is possible to achieve a processed surface having a surface roughness of not more than 0.1 µm with luster by using a very simple controlling operation. Moreover, it is possible to increase the processing rate by increasing the repeated frequency of the discharging energy.

As described above, in the present invention the electrode and the processing subject are relatively shifted while being pressed. Therefore, the grease 13 is drawn between the electrode 1 and the processing subject 2 so that the discharge processing is carried out while a very thin oil film is being formed, thereby making it possible to also remove processing dusts at the same time. As a consequence, after the processing operation, the processing medium that has been used in the processing is easily disposed by wiping the grease 13.

Moreover, in the present invention, since the electrode 1 is maintained in a floating state on the very thin grease 13 on the processing subject 2, it is possible to eliminate a processing vessel, an expensive NC, a servo, etc. which are required for the general discharge processing device; therefore, it becomes possible to manufacture the device at low costs, and also to carry out the discharge processing stably with high precision.

The above-mentioned explanation has exemplified a case in which the grease is supplied. However, the grease may be preliminarily applied onto the processing subject or the electrode, instead of being supplied.

Moreover, in the above-mentioned explanation, the grease is used as the insulating processing medium. However, besides semisolid substances such as grease, for example, lubricants such as liquid lubricants including mineral-oil-type lubricating oil, synthetic lubricating oil, etc., base oil that is a main component of grease, oils and fats such as petrolatum, oil and heavy oil, or materials formed by allowing a polymeric water absorber to absorb water, may be used. Thus, any material may be used as long as it forms an insulating thin film.

The above-mentioned polymeric water absorber is the same material as those used for water absorbents in paper diapers, and these materials become gel when water is contained therein, and upon application of a pressure, they are allowed to flow like grease to form a film. With respect to water to be contained in the polymeric absorber, pure water is preferably used, and water having a specific resistance as high as possible is used.

Moreover, the above-mentioned explanation has exemplified a case in which insulating grease is used as the processing medium so that the processing vessel is eliminated. However, when processing oil is held in the processing vessel with the electrode and the processing subject being dipped therein so as to be discharge-processed, the electrode 1 and the processing subject 2 may be pressed, and relatively shifted, thereby making it possible to provide a discharge processing operation with a smooth surface roughness.

Furthermore, the above-mentioned explanation has exemplified a case in which the pressing force is applied between the electrode and the processing subject by using an elastic restoring force by a coil spring. However, another elastic member such as a plate spring may be used. Furthermore, another method may be used in which, without the application of the elastic member, a predetermined pressing force is given by a current control of a linear motor.

Silicon powder may be mixed into the processing medium and the discharge processing is applied thereto. Thus, it is possible to obtain a more uniform discharge, and consequently to provide a processed face that is smoother in the surface roughness.

If the processing medium is made of mineral oil, etc., since carbon is contained therein, the processing medium is used as it is. If the processing medium does not contain carbon, carbon powder is mixed therein and used as the processing medium. A green compact formed by compressing and molding metal or its powder such as titanium that forms a hard compound such as titanium carbide (TiC) may be used as the electrode 1. In this case, a discharge processing operation is carried out so as to form a hard ceramics coat film on the processing face of the processing subject 2. Thus, instead of a processing method such as PVD and CVD, this process makes it possible to carry out a surface coating process on any surface very easily.

Moreover, a green compact, formed by compressing and molding the same material as that of the processing subject 2 or powder thereof, is usedas the electrode 1, and a discharge processing operation is carried out with an insulating processing medium such as grease being interpolated between the electrode 1 and the processing subject 2 so that the electrode material is allowed to adhere to the processing face of the processing subject 2, thereby making it possible to carry out a build-up processing operation. In this method, since the film thickness of the insulating processing medium such as grease is thin, metal scattered at the time of generation of a discharge is small in its rate at which it is dispersed and mixed into the insulating processing medium such as grease, and is allowed to adhere to the processing subject 2 with high efficiency. Therefore, the electrode is less susceptible to consumption, and it is possible to carry out a build-up processing operation efficiently with less discharging energy.

### SECOND EMBODIMENT

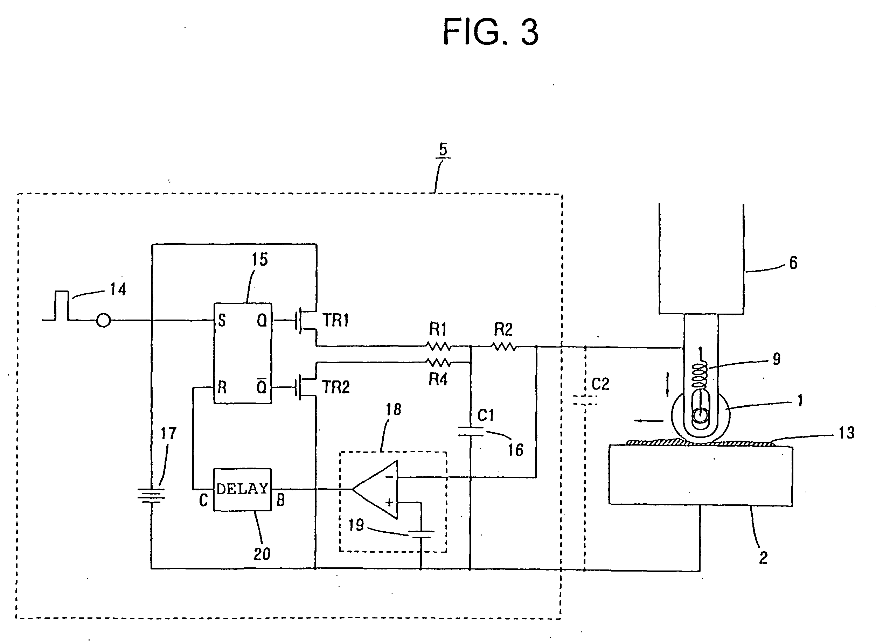

A discharge processing device according to a second embodiment of the present invention is shown in Fig. 3. Reference numeral 1 denotes an electrode which is formed into a cylinder shape. The electrode 1 is secured to a shaft and this shaft is rotated by a driving device such as a motor, not shown, and pressed onto the processing subject 2 by a restoring force by the coil spring 9. In this manner, the rotation of the electrode 1 and the pressing force onto the processing subject 2 allow the grease 13 to form a very thin film between the electrode 1 and the processing subject 2. In this state, a power supply device 5 is connected thereto, and a discharge processing operation is carried out.

The following description will discuss the arrangement of a power supply device 5. In Fig. 3, reference number 14 denotes a discharging instruction pulse. Reference numeral 15 denotes a state memory section for carrying out state changes between set and rest states, which is typically represented by a flip-flop, etc. Reference numeral 16 denotes a discharging energy accumulation section typically represented by a capacitor, etc. Reference numeral 17 denotes a DC current power supply device, and reference numeral 18 denotes a discharge detection section. Reference numeral 19 denotes a reference voltage and reference numeral 20 denotes a delay element. The discharge detection section 18 compares the polar-to-polar voltage between the electrode 1 and the processing subject 2 with a reference voltage 19 so that when the polar-to-polar voltage drops to a discharging voltage, it outputs a discharge generation signal B, and a delay element 20 delays the signal B for a predetermined period of time to form a discharging stop signal C which is inputted to the state memory section 15.

In Fig. 3, a charge is accumulated in the discharging energy accumulation section 16, and the DC current power supply device 17, a switching element TR1 and a current regulating element R1 typically represented by a resistor constitute a discharging energy charging section. The discharging energy accumulation section 16, a current regulating element R2 and a portion connecting the electrode 1 and the processing subject 2 constitute a discharging current control section, and the discharging energy accumulation section 16 and a current regulating element R4 as well as a switching element TR2 constitute an excessive energy discharging section.

The state memory section 15 is set by a discharging instruction pulse 14 so that the switching element TR1 of the discharging energy charging section is turned on, thereby charging the discharging energy accumulation section 16. At this time, the switching element TR2 of the excessive energy discharging section is turned off. Upon receipt of an increase of the voltage of the discharging energy accumulation section 16, the polar-to-polar voltage increases, and when the oil film of the grease 13 is subjected to an insulation breakdown, a discharge is generated. This discharging current is allowed to flow through the discharging energy accumulation section 16, the current regulating element R2, the electrode 1 and the processing subject 2. The current regulating element R2 has a function for regulating the current value so that the discharging current is set to an appropriate value. This discharging current is kept flowing for a period of time that is determined by a time constant between the discharging energy accumulation section 16 and the current regulating element R2.

Moreover, the state memory section 15 is reset by the discharging stop signal C. In other words, the set time of the delay element 20 forms the polar-to-polar discharging time, thereby controlling the discharging energy. The state memory section 15 is reset by the discharging stop signal C that is an output of the delay element 20 with the result that the switching element TR1 is turned off and the switching element TR2 is turned on. At this time, since the polar-to-polar discharging current is still flowing, and since the switching element TR2 is turned on in a short time by the time constant given by the discharging energy accumulation section 16 and the discharging current regulating element R2, the charge of the discharging energy accumulation section 16 is discharged through the current regulating element R4 and the switching element TR2 so that the discharging current between the electrode 1 and the processing subject 2 is stopped.

The above-mentioned operation is repeated for each discharging instruction pulse 14 so that a discharge processing operation is carried out. The discharge energy accumulation section 16 is commonly used by the discharging energy charging section, the discharging current control section and excessive energy discharging section so that the charging and discharging operations are controlled.

The above-mentioned explanation has exemplified a case in which the current regulating elements R1 and R4 are individually installed; however, these may be set to the same value and provided as a common element, and the common line may be connected to the switching elements TR1 and TR2.

The power supply device 5 having the above-mentioned arrangement is controlled by a simple controlling operation so that it is possible to provide a small-size power supply device at low costs. In particular, since the discharging voltage is a low voltage of not more than several volts, the voltage of the current power supply 17 is set to as small as 10 to 20 V, and since the respective elements are easily controlled with smaller losses, it is possible to provide a small-size power supply device at low costs.

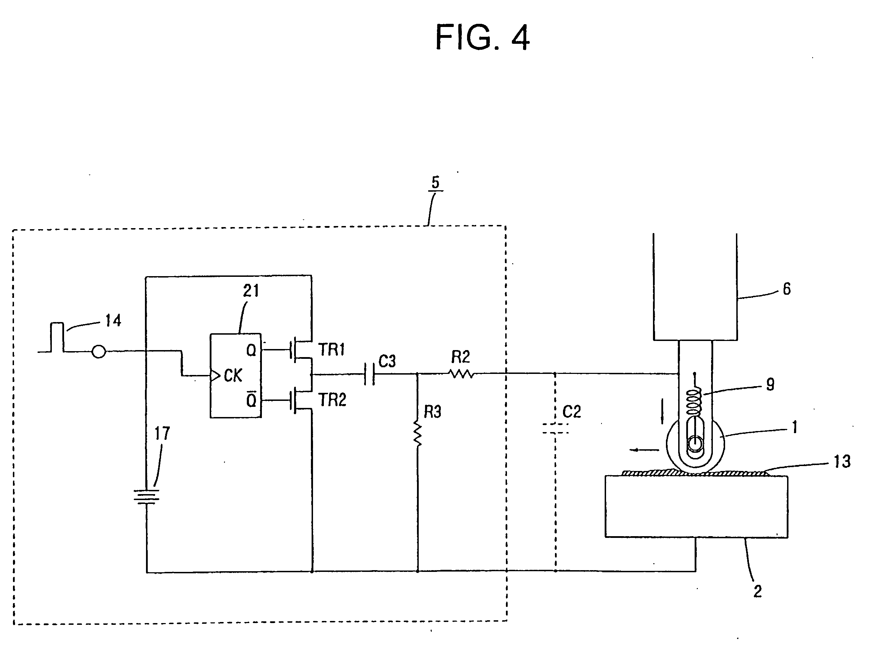

Fig. 4 shows the arrangement of another power supply device. Reference number 21 denotes a state memory section, and switching elements TR1 and TR2 are inverted in their ON-OFF states according to the state of the state memory section 21. These two switching elements TR1 and TR2 and the state memory section 21 provide an ac output having a frequency one-half the frequency of the discharging instruction pulse 14 so that this portion is operated as an AC rectangular wave power supply. The discharging energy control section, constituted by a capacitor C3 and a current regulating element R3, regulates the discharging time so that a discharge is not allowed to continue for a period of time not less than a time constant given by the capacitor C3 and the current regulating element R3. The discharging current control section, constituted by the capacitor C3 and a current regulating element R2, regulates the current value of the discharge to a predetermined value by using the current regulating element R2.

In this case, at the time when the output of the AC rectangular wave power supply is switched between the negative and positive polarities, the capacitor C3 provides discharging energy as a result of a change in the charge; therefore, the processing energy is controlled by properly selecting such a capacitor having a predetermined value of capacitance.

In the same manner as the power supply device as shown in Fig. 3, the power supply device 5 having the above-mentioned arrangement makes it possible to provide a small-size power supply device at low costs.

Moreover, since this method does not need a discharging detection process, it is possible to easily construct a power supply device using a high frequency such as several MHz; thus, this method is suitable for obtaining a processed surface with a smoother surface roughness, and also realizes a faster processing rate.

### THIRD EMBODIMENT

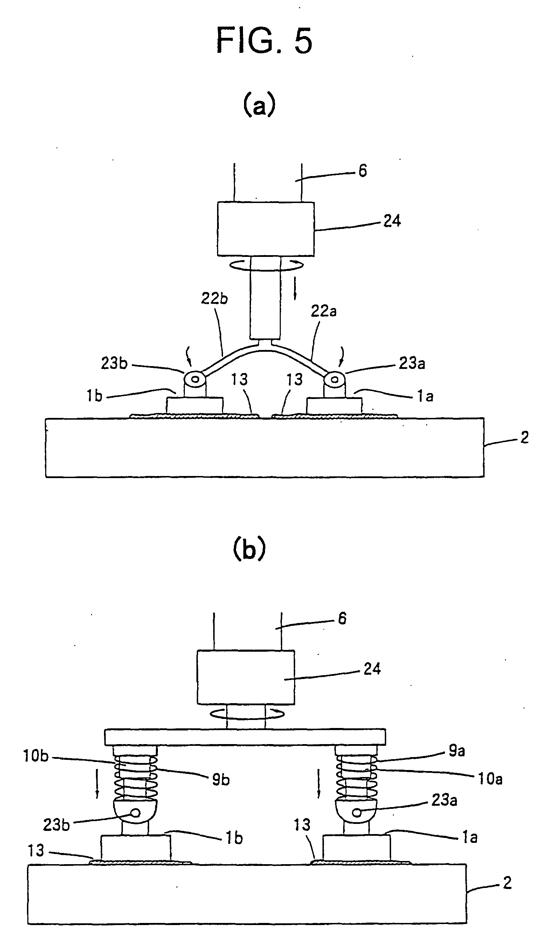

A discharge processing device according to a third embodiment of the present invention is shown in Fig. 5. In Fig. 5(a), reference numbers 1a and 1b denote electrodes, 2 is a processing subject, 6 is a shifting device, 13 is grease, 22a and 22b are plate springs, 23a and 23b are rotation joints, each having a single degree of freedom, and 24 is a rotation driving device that is a rotation means of the electrode. The electrodes 1a and 1b are attached to the plate springs 22a and 22b respectively through rotation joints 23a and 23b, each having a single degree of freedom, and pressed onto the processing subject 2 by the restoring forces of the plate springs 22a and 22b.

When discharging energy is applied while the electrodes 1a and 1b are being rotated on the grease 13 by the rotation driving device 24 with the electrodes 1a and 1b being pressed onto the processing subject 2, the processing subject 2 is subjected to a discharge processing operation. Since the electrode area is wide, a uniform processing operation covering a wide area can be carried out so that it is possible to obtain a finely processed face by using simple controlling operations such as pressing and rotating operations; thus, this method is also utilized as a discharge polishing method.

In the above-mentioned arrangement, the rotation joints 23a and 23b having a single degree of freedom are used. However, instead of these, universal joints or ball joints may be used.

Moreover, instead of the plate springs 22a and 22b, as illustrated in Fig. 5(b), the restoring forces of coil springs 9a and 9b may be used for pressing the processing subject 2 onto the electrodes 1a and 1b Alternatively, another elastic member such as a disc spring may be used.

Furthermore, in the above-mentioned arrangement, two electrodes are used; however, one or three or more electrodes may be used.

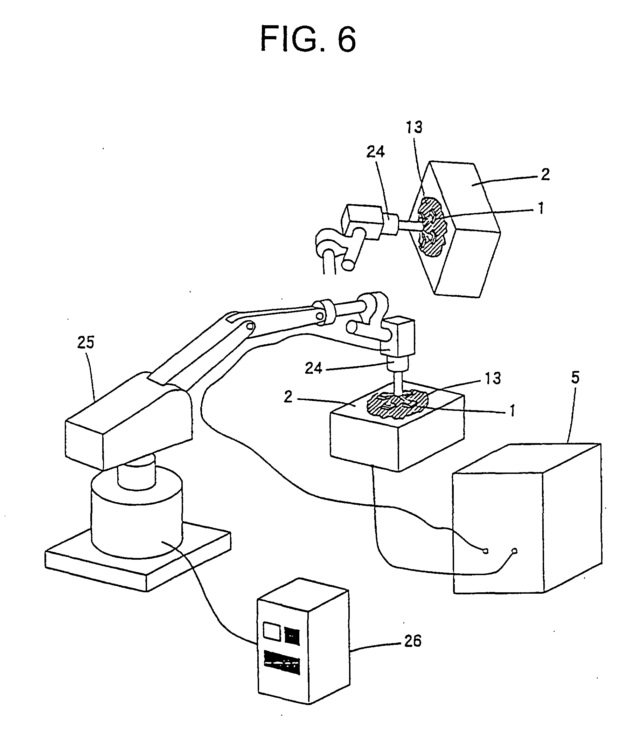

Fig. 6 shows another arrangement in which the above-mentioned rotation driving device is used. Reference number 1 denotes an electrode, 2 denotes a processing subject, 5 denote a power supply device, 13 denotes grease, 24 denotes a rotation driving device, 25 denotes a robot and 26 denotes a control device. The electrode 1, which is rotated by the rotation driving device 24, is supported by the robot 25 so that a discharge processing operation is carried out on any desired face of the processing subject 2.

In accordance with the discharge processing device of the present invention, since it is only necessary to press the rotating electrode section onto the processing subject, it is not necessary to provide a positioning process with high precision, and it is only necessary to provide a certain degree of pressing pressure, and since the grease 13 is free from flowing even when the processing face is tilted, it is possible to apply a discharge processing operation to the processing face maintained in any desired direction. Therefore, the application of the robot is suitable for such an usage, and the robot 25 is controlled by the control device 26 depending on the position, shape, etc. of the processing subject 2 so that the electrode 1, which is rotated by the rotation driving device 24, is supported in a position and an orientation freely set so as to process the processing subject.

In the above-mentioned explanation, the electrode 1 is rotated by the rotation driving device 24. However, instead of the rotation driving device 24, the rotary shaft of a wrist section such as a wrist roll axis of the robot may be used.

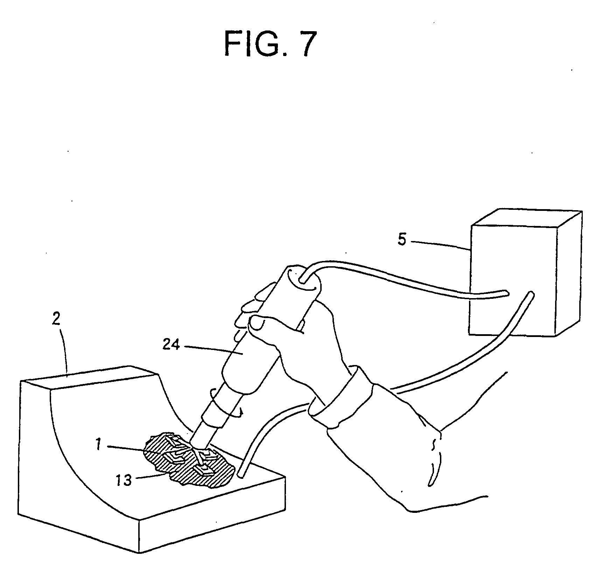

Moreover, Fig. 7 shows another arrangement in which the above-mentioned rotation driving device is used. Reference number 1 denotes an electrode, 2 denotes a processing subject, 5 denotes a power supply device, 13 denotes a grease and 24 denotes a rotation driving device. The electrode, which is rotated by the rotation driving device 24, is supported by the human hand so as to carry out a discharge processing operation.

The grease 13 is preliminarily applied to the processing subject 2, and it is only necessary to press the electrode 1 being rotated by the rotation driving device 24 onto the processing subject 2 so as to easily carry out the processing.

Since the grease 13 is free from flowing even when the processing face is tilted, the processing is carried out while the grease 13 is extended in a desired processing direction based upon an operator's judgment. This method has high flexibility and makes it possible to arrange the device at very low costs.

### FOURTH EMBODIMENT

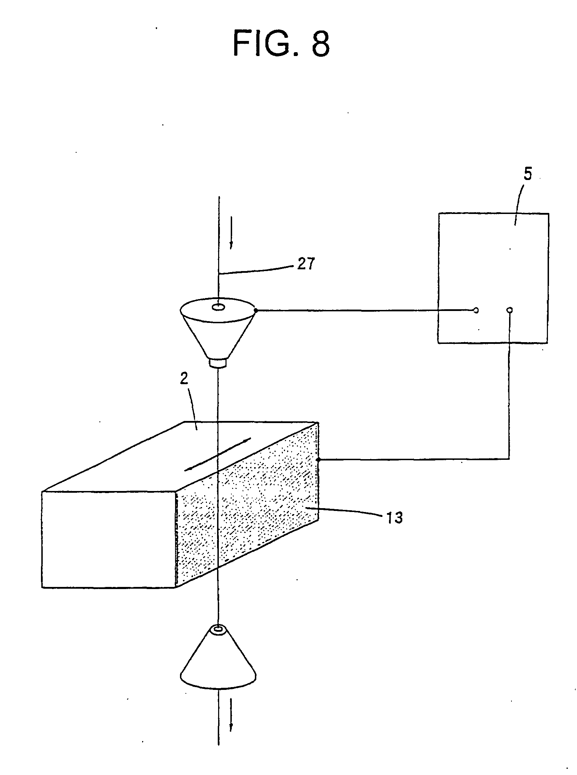

A discharge processing device according to a fourth embodiment of the present invention is shown in Fig. 8. Reference number 2 denotes a processing subject, 5 denotes a power supply device, 13 denotes grease and 27 denotes a conductive wire. The conductive wire 27 is supplied while a tension is being applied thereto. The grease 13 is applied to the processing face of the processing subject 2, and the conductive wire 27 is made in contact with the processing face of the processing subject 2, and while the conductive wire 27 and the processing subject 2 are being pressed thereon, the conductive wire 27 or the processing subject 2 is relatively shifted so that a discharging processing operation is carried out by utilizing the film of the grease 13 formed between the conductive wire 27 and the processing subject 2.

This arrangement makes it possible to easily carry out a wire discharge processing operation without using a processing vessel, etc., and is particularly effective in the finishing process for the processed face.

### INDUSTRIAL APPLICABILITY

As described above, the discharge processing method and device according to the present invention are well suited for the removing processing operation and the surface treatment operation by the use of discharging.

## Claims

1. A discharge processing method, wherein an insulating processing medium is interpolated between an electrode and a processing subject and discharging energy is supplied between the electrode and the processing subject so that the processing subject is processed by the discharge, wherein a processing is carried out with the electrode being pressed onto the processing subject at a predetermined pressure so as to allow the processing medium to form a thin film while the electrode and the processing subject are being relatively moved.

2. The discharge processing method according to claim 1, wherein the thin film is formed with a thickness of 0.1 to 1 µm.

3. The discharge processing method according to claim 1, wherein the relative movement is carried out in a spiral manner.

4. The discharge processing method according to claim 1, wherein a lubricant is used as the processing medium.

5. The discharge processing method according to claim 1, wherein grease is used as the processing medium.

6. The discharge processing method according to claim 1, wherein a material formed by allowing a polymeric water absorber to absorb water is used as the processing medium.

7. The discharge processing method according to claim 1, wherein silicon powder is mixed into the processing medium.

8. The discharge processing method according to claim 1, wherein a green compact, which is formed by compressing and molding metal such as titanium that forms a hard compound such as titanium carbide (TiC) or powder thereof, is used as the electrode, and a processing medium containing carbon is used as the processing medium.

9. The discharge processing method according to claim 1, wherein a green compact, formed by compressing and molding the same material as that of the processing subject or powder thereof, is used as the electrode.

10. The discharge processing method according to claim 1, wherein the contact area between the electrode and the processing subject, the pressing pressure, the relative shifting rate and the viscosity of the processing medium are used as parameters, and in that the film thickness of the processing medium between the electrode and the processing subject is controlled by changing at least one of these parameters.

11. The discharge processing method according to claim 1, wherein a conductive wire is used as the electrode.

12. The discharge processing method according to claim 1, wherein the processing is carried out while the electrode is being rotated.

13. A discharge processing device, wherein an insulating processing medium is interpolated between an electrode and a processing subject and discharging energy is supplied between the electrode and the processing subject so that the processing subject is processed by the discharge, **characterized by** comprising:
a pressing unit which presses an electrode onto a processing subject with a predetermined pressure; and
a driving unit which moves the electrode and the processing subject relative to each other,
wherein a processing is carried out while the electrode is pressed onto the processing subject at a predetermined pressure so as to allow a processing medium to form a thin film with the electrode and the processing subject being relatively moved.

14. The discharge processing device according to claim 13, wherein the thin film is formed with a thickness of 0.1 to 1 µm.

15. The discharge processing device according to claim 13, wherein the relative movement is carried out in a spiral manner.

16. The discharge processing device according to claim 13, wherein a lubricant is used as the processing medium.

17. The discharge processing device according to claim 13, wherein grease is used as the processing medium.

18. The discharge processing device according to claim 13, wherein a material formed by allowing a polymeric water absorber to absorb water is used as the processing medium.

19. The discharge processing device according to claim 13, wherein silicon powder is mixed into the processing medium.

20. The discharge processing device according to claim 13, wherein a green compact, which is formed by compressing and molding metal such as titanium that forms a hard compound such as titanium carbide (TiC) or powder thereof, is used as the electrode, and a processing medium containing carbon is used as the processing medium.

21. The discharge processing device according to claim 13, wherein a green compact, formed by compressing and molding the same material as that of the processing subject or powder thereof, is used as the electrode.

22. The discharge processing device according to claim 13, further comprising a control unit which controls the contact area between the electrode and the processing subject, the pressing pressure, the relative shifting rate and the viscosity of the processing medium as parameters, and gives an instruction for changing at least one of the pressing pressure and the relative shifting rate.

23. The discharge processing device according to claim 13, wherein a conductive wire is used as the electrode.

24. The discharge processing device according to claim 13, further comprising a rotation unit which rotates the electrode.

25. The discharge processing device according to claim 13, further comprising:
a state memory unit which controls state changes between setting and resetting states;
a discharge energy charging unit containing a current regulating element that is driven by the setting state of the state memory unit made by a discharge instruction pulse;
a discharge energy accumulation unit that is charged by the discharge energy charging unit;
a discharge current control unit containing a discharge current regulating element placed between the discharge energy accumulation unit and the electrode; and
an excessive energy discharging unit which is connected to the discharge energy accumulation unit and contains a current regulating element that is driven by the resetting state of the state memory unit,
wherein the state memory unit is reset with a predetermined time delay after a generation of a discharge between the electrode and the processing subject so that the excessive energy discharging unit is driven.

26. The discharge processing device according to claim 13, wherein the power supply device includes,
a state memory unit which is inverted in its ON-OFF states by a discharge instruction pulse;
an AC rectangular wave power supply unit which is driven by the state memory unit, and includes a switching element that alternately connects the positive and negative electrodes of a dc power supply;
a discharge current control unit which is placed between the AC rectangular wave power supply unit and the electrode, and includes a capacitor and a current regulating element; and
a discharge energy control unit which is connected to the discharge current control unit, and is constituted by the capacitor and the current regulating element,
wherein a change in charge at the time when the ac rectangular power supply unit is switched between the positive and negative states in its output is allowed to form discharging energy.
